# EUROPEAN PATENT APPLICATION

(11) **EP 2 636 994 A1**
(43) Date of publication of application: **11.09.2013**
(21) Application number: 13157078.0
(22) Date of filing: 27.02.2013
(51) Int. Cl.: G01C 19/66

(54) **Means to attach getter to getter retaining ring**

(30) Priority: 06.03.2012 US 201213413289
(71) Applicant: Honeywell International Inc., Morristown, NJ 07962-2245 (US)
(72) Inventor: Thorland, Rodney H., Morristown, NJ New Jersey 07962-2245 (US); Goblish, George L., Morristown, NJ New Jersey 07962-2245 (US); Seiber, Bruce A., Morristown, NJ New Jersey 07962-2245 (US)
(74) Representative: Houghton, Mark Phillip

(57) **Abstract**

A retaining clip for a getter is provided. The retaining clip for a getter includes a curved structure including a first surface, a second surface opposing the first surface, a first-edge surface, and a second-edge surface opposing the first-edge surface, the curved structure curved in a major curve having a major radius-of-curvature and a major axis perpendicular to the major radius-of-curvature; and at least one tab seamlessly extending from at least one of the first-edge surface and the second-edge surface. The curved structure is configured to be operably retained in a getter cavity with the getter that is attached to the at least one tab.

## Description

### BACKGROUND

Some getter types do not have support tab feature for attachment to getter retaining ring. Getters that do not include a support tab feature are difficult to attach to the getter retaining ring.

### SUMMARY

The present application relates to a retaining clip for a getter. The retaining clip for a getter includes a curved structure including a first surface, a second surface opposing the first surface, a first-edge surface, and a second-edge surface opposing the first-edge surface, the curved structure curved in a major curve having a major radius-of-curvature and a major axis perpendicular to the major radius-of-curvature; and at least one tab seamlessly extending from at least one of the first-edge surface and the second-edge surface. The curved structure is configured to be operably retained in a getter cavity with the getter that is attached to the at least one tab.

The details of various embodiments of the claimed invention are set forth in the accompanying drawings and the description below. Other features and advantages will become apparent from the description, the drawings, and the claims.

### DRAWINGS

Figure 1 shows a front view of one embodiment of a retaining clip for a getter in accordance with the present invention;

Figure 2A shows a side view of the retaining clip of Figure 1;

Figure 2B is an enlarged view of a tab seamlessly extending from a first-edge surface of the retaining clip of Figure 1;

Figure 3A shows a front view of one embodiment of a retaining clip for a getter in accordance with the present invention;

Figure 3B shows a front view of the retaining clip of Figure 3A with an attached getter;

Figure 3C shows a side view of the retaining clip of Figure 3A with an attached getter;

Figure 4 shows an oblique view of one embodiment of the retaining clip of Figures 3A-3C in an exemplary cavity in accordance with the present invention;

Figures 5, 6, 7A, 7B, 8A-8C, 9, and 10A-10F show views of embodiments of retaining clips for a getter in accordance with the present invention;

Figure 11 is a flow diagram of one embodiment of a method of forming a retaining clip for a getter in accordance with the present invention; and

Figure 12 is a front view of a flat metal sheet with an outline of a curved-structure region and two tab regions in accordance with the present invention.

In accordance with common practice, the various described features are not drawn to scale but are drawn to emphasize features relevant to the present invention. Like reference characters denote like elements throughout figures and text.

### DETAILED DESCRIPTION

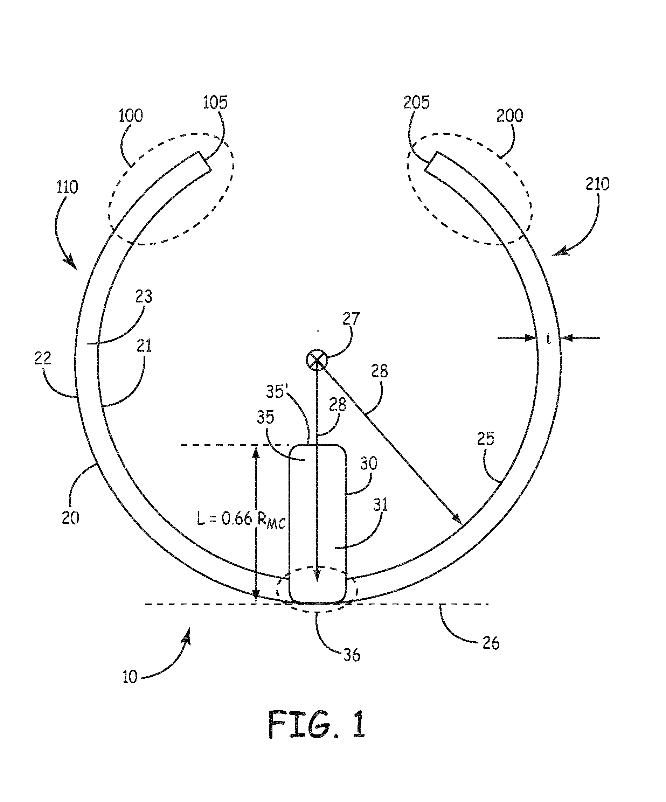

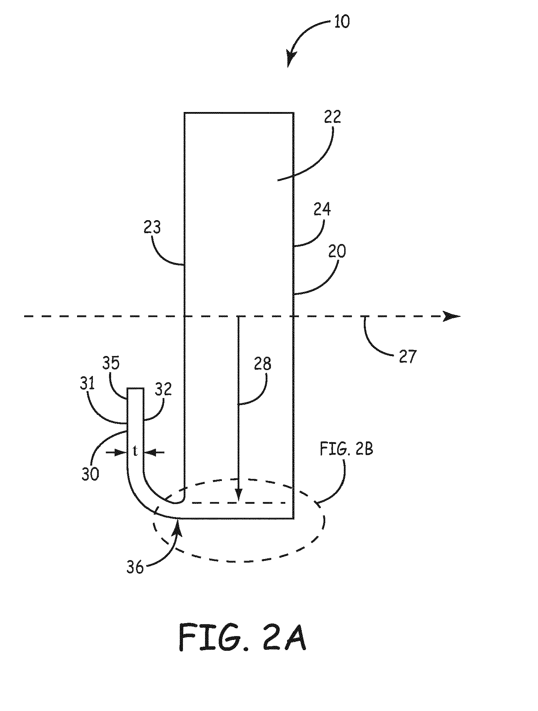

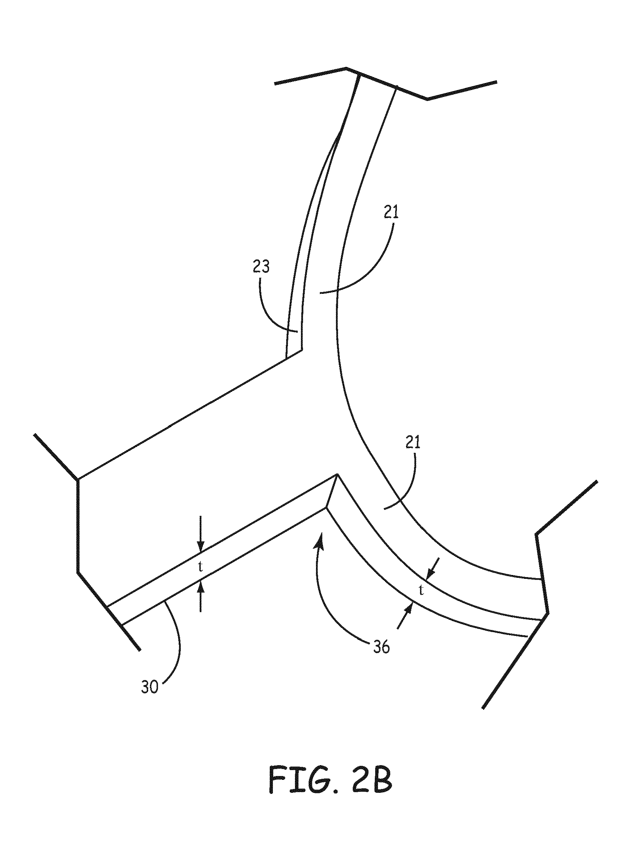

Figure 1 shows a front view of one embodiment of a retaining clip 10 for a getter in accordance with the present invention. Figure 2A shows a side view of the retaining clip 10 of Figure 1. Figure 2B is an enlarged view of a tab 30 seamlessly extending from a first-edge surface of the retaining clip of Figure 1. The terms "retaining clip", "getter retaining clip", and "getter retaining ring" are used interchangeably herein.

The retaining clip 10 includes a curved structure 20 and a tab 30. The curved structure 20 includes a first surface 21, a second surface 22 opposing the first surface 21, a first-edge surface 23, and a second-edge surface 24 (Figure 2A) opposing the first-edge surface 23. The curved structure 20 is curved in a major curve 25 having a major radius-of-curvature 28 and a major axis 27 perpendicular to the major radius-of-curvature 28. The first surface 21 is also referred to herein as "inner surface 21" or "first curved surface 21". The second surface 22 is also referred to herein as "outer surface 22" or "second curved surface 22". The inner surface 21 and the outer surface 22 are separated by a curve thickness "t".

The curved structure 20 includes a first-end portion 100, which is between a first-interfacing curve region represented generally at 110 and the end 105 (also referred to herein as tip 105). The curved structure 20 also includes a second-end portion 200, which is between a second-interfacing curve region represented generally at 210 and the end 205 (also referred to herein as tip 205). As shown in Figure 1, the major curve 25 seamlessly extends from the end 105 of the first-end portion 100 to the end 205 of the second-end portion 200. The major curve 25 of curved structure 20 is substantially circular in shape. As shown in Figure 1, the major curve 25 subtends more than 270 degrees.

The tab 30 seamlessly extends from the first-edge surface 23 at the extension region represented generally at 36. The extension region 36 is also referred to herein as a "first-extension region 36" of the first-edge surface 23. Dashed line 26 is a tangential to the curved structure 20 at the extension region 36 from which the tab 30 seamlessly extends from the curved structure 20.

As defined herein, a seam is created by material attaching a first region and a second region. As defined herein, a "seamless extension" is an extension that is smoothly continuous, between a first region (e.g., curved structure 20) and a second region (e.g., tab 30), without an attaching material. As is shown in Figure 2B, there is no attaching material at the extension region 36 between the first-edge surface 23 and the tab 30, since the tab 30 and curved structure 20 are formed from a single piece of material, such as a single piece of sheet metal. For this reason, the tab 30 extends seamlessly from the first-edge surface 23. The tab 30 is not attached to the first-edge surface 23 by spot welding, soldering, or any other attachment process, so there is no seam between the tab 30 and the first-edge surface 23. As is known in the art, welding requires filler material to form a weld pool material to be used during the welding process. Likewise, soldering (or brazing) requires filler material (solder) to conjoin two pieces.

The tab 30 has a first surface 31 and a second surface 32, which opposes the first surface. The first surface 31 and the second surface 32 are separated by a tab thickness "t" that is equal to the curve thickness "t" since the tab 30 and major curve 25 are formed from a single piece of material, such as a single piece of sheet metal.
In one implementation of this embodiment, the tab thickness does not equal to the curve thickness if the single piece of material from which the tab 30 and major curve 25 are formed is non-uniform in thickness. In this case, the curve thickness "t" can vary along the curved structure 20 and the tab thickness can vary along the length L of the tab 30.

Only the first surface 31 of tab 30 is visible in Figure 1. The tab 30 has a distal end 35, which is near the tip 35' and opposing the extension region 36. When the retaining clip 10 is operably positioned in a getter well, a getter is attached to the distal end 35 of the tab 30. In one implementation of this embodiment, the getter is operably attached to a mid-section of the tab 30. The length L of the tab 30 from extension region 36 to the tip 35' of the distal end 35 is shown in Figure 1 to be 0.66 of the major radius-of-curvature 28 (R_{MC}).

As shown in Figures 1 and 2A, the tab 30 is bent to extend approximately parallel to the major radius-of-curvature 28 of the curved structure and approximately perpendicular to the major axis 27.

There are various embodiments of retaining clips that can be formed by bending the first-end portion 100 and/or the second-end portion 200 (Figure 1) in the same or different directions as described herein. There are various embodiments of retaining clips that can be formed by seamlessly extending one or more tabs from the first-edge surface 23 and/or the second-edge surface 24 (Figure 2A) as described herein.

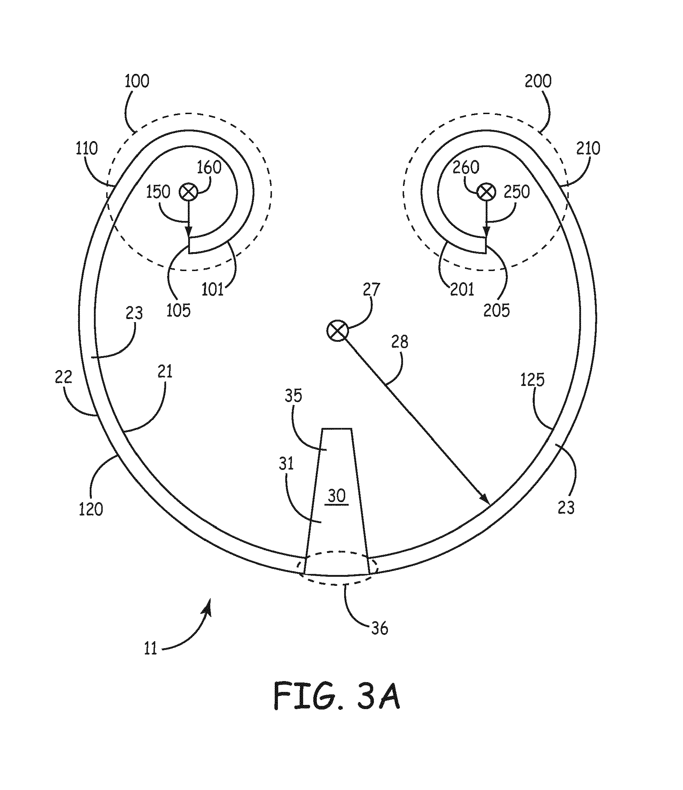

Figures 3A, 5, 6, 7A, 7B, 8A-8C, 9, and 10A-10F show views of embodiments of retaining clips for a getter in accordance with the present invention. Each of the embodiments of retaining clips 11, 12, 13, 14, 15, 16, 17, 18, 601, 602, 603, 603, 604, 605, and 606 shown in respective Figures 3A, 5, 6, 7A, 7B, 8A-8C, 9, and 10A-10E are structurally formed with a curved structure including a first surface, a second surface opposing the first surface, a first-edge surface, and a second-edge surface opposing the first-edge surface and at least one tab that seamlessly extends from either or both of the first-edge surface and the second-edge surface. In each of the embodiments of retaining clips 11,12, 13, 14, 15, 16, 17, 18, 601, 602, 603, 603, 604, 605, and 606 shown in respective Figures 3A, 5, 6, 7A, 7B, 8A-8C, 9, and 10A-10E, the curved structure includes a major curve having a major radius-of-curvature and a major axis perpendicular to the major radius-of-curvature, and the curved structure is configured to be operably retained in a getter cavity with a getter attached to a distal end of the one or more tabs.

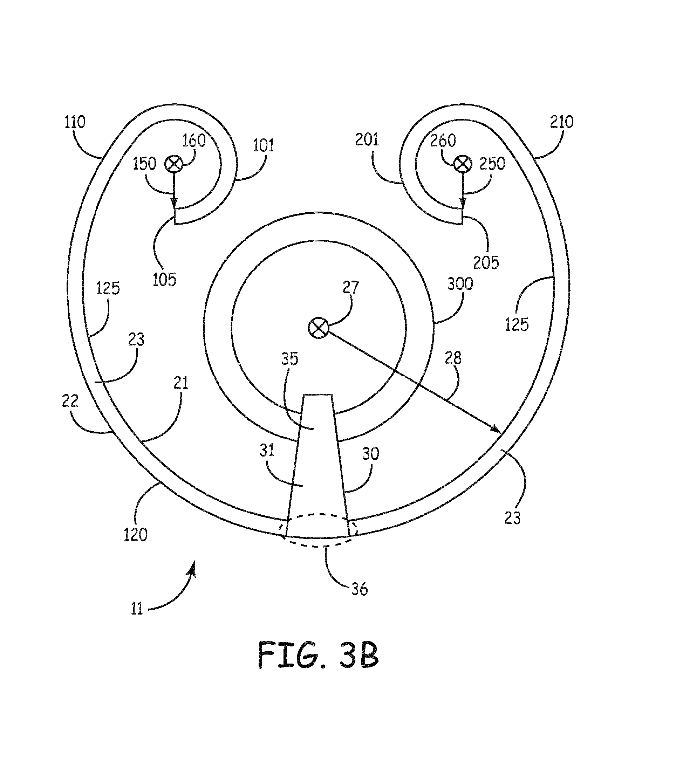

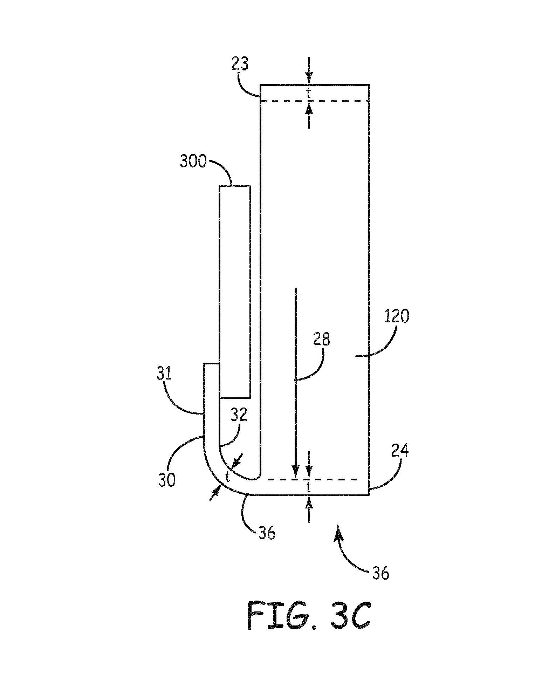

Figure 3A shows a front view of one embodiment of a retaining clip 11 for a getter in accordance with the present invention. Figure 3B shows a front view of the retaining clip 11 of Figure 3A with an attached getter 300. Figure 3C shows a side view of the retaining clip 11 of Figure 3A with an attached getter 300. The retaining clip 11 includes a curved structure 120 and tab 30. The tab 30 seamlessly extends from the first-edge surface 23 at the extension region 36.

The curved structure 120 includes the first surface 21, the second surface 22 opposing the first surface 21, the first-edge surface 23, and the second-edge surface 24 opposing the first-edge surface 23 as described above with reference to Figures 1, 2A and 2B. The curved structure 120 in retaining clip 11 differs from the curved structure 120 of the retaining clip 10 of Figures 1 and 2A in that first-end portion 100 of the curved structure 120 is curved into a first-minor curve 101 and the second-end portion 200 of the curved structure 120 is curved into a second-minor curve 201. The "first-minor curve 101" is also referred to herein as "first-loop feature 101". The "second-minor curve 201" is also referred to herein as "second-loop feature 201". Thus, the major curve 125 of the curved structure 120 extends from the first-interfacing curve region 110 to the second-interfacing curve region 210. The major curve 125 is substantially circular in shape from the first-interfacing curve region 110 to the second-interfacing curve region 210. As shown in Figure 3A, the major curve 125 subtends more than 180 degrees. In one implementation of this embodiment, the major curve 125 subtends more than 240 degrees.

The first-minor curve 101 has a first-minor radius-of-curvature 150 and a first-minor axis 160 perpendicular to the first-minor radius-of-curvature 150. The first-minor curve 101 is substantially circular in shape from the first-interfacing curve region 110 to the end 105 of the first-end portion 100.

The second-minor curve 201 has a second-minor radius-of-curvature 250 and a second-minor axis 260 perpendicular to the second-minor radius-of-curvature 250. The second-minor curve 201 is substantially circular in shape from the second-interfacing curve region 210 to the end 205 of the second-end portion 200.

As shown in Figures 3A and 3B, the first-minor curve 101 continues to curve in the same direction in which a first-interfacing curve region 110 (between the major curve 125 and the first-minor curve 101) is curving. Similarly Figures 3A and 3B show the second-minor curve 201 continues to curve in the same direction in which a second-interfacing curve region 210 (between the major curve 125 and the second-minor curve 201) is curving. Since the first-interfacing curve region 110 and the second-interfacing curve region 210 are curved in different directions, the first-minor curve 101 and the second-minor curve 201 are curving in different directions (towards each other).

As shown in Figures 3A and 3B, the first-loop feature 101, which is formed when end portion 100 is curved, has a fixed first-minor radius-of-curvature 150 that does not change significantly as the first-loop feature 101 extends from about the first-interfacing curve region 110 to the tip 105 of the first end portion 100. In this embodiment, the first-loop feature 101 has the shape of a partial circle extending from the first-interfacing curve region 110. Likewise, the second-loop feature 201, which is formed when end portion 200 is curved, has a fixed second-minor radius-of-curvature 250 that does not change significantly as the second-loop feature 201 extends from about the second-interfacing curve region 210 to the tip 205 of the second end portion 200. In this embodiment, the second-loop feature 201 has the shape of a partial circle extending from the second-interfacing curve region 210.

In one implementation of this embodiment, first-minor curve 101 a variable minor radius-of-curvature 150 that changes as the curve extends from the first-interfacing curve region 110 to the tip 105 of the first end portion 100. In this embodiment, the minor radius-of-curvature 150 is defined to be the minor radius-of-curvature at the tip 105 of the first end portion 100 (Figure 1). In another implementation of this embodiment, second-minor curve 201 a variable minor radius-of-curvature 250 that changes as the curve extends from the second-interfacing curve region 210 to the tip 205 of the second end portion 200. In this embodiment, the minor radius-of-curvature 250 is defined to be the minor radius-of-curvature at the tip 205 of the second end portion 200 (Figure 1).

The first-minor radius-of-curvature 150 and the second-minor radius-of-curvature 250 are less than the major radius-of-curvature 28. In one implementation of this embodiment, the minor radii-of-curvature 150 and 250 are less than half of the major radius-of-curvature 28. In another implementation of this embodiment, the minor radii-of-curvature 150 and 250 are less than a quarter of the major radius-of-curvature 28. In one implementation of this embodiment, the first-minor radius-of-curvature 150 and the second-minor radius-of-curvature 250 are equal.

As shown in Figures 3B and 3C, a getter 300 is attached to the second surface 32 (Figure 2A) of the distal end 35 of the tab 30. In one implementation of this embodiment, the getter 300 is spot welded to the second surface 32 at the distal end 35. In one implementation of this embodiment, the getter 300 is attached to the first surface 31 (Figure 2A) at the distal end 35.

The getter 300 can be any type of getter as know in the art. In one implementation of this embodiment, the getter is an annular ring comprised of a material that absorbs gasses in a cavity that would prevent activity of a system in which the cavity and the retaining clip 11 are positioned or to which the cavity and the retaining clip 11 are exposed.

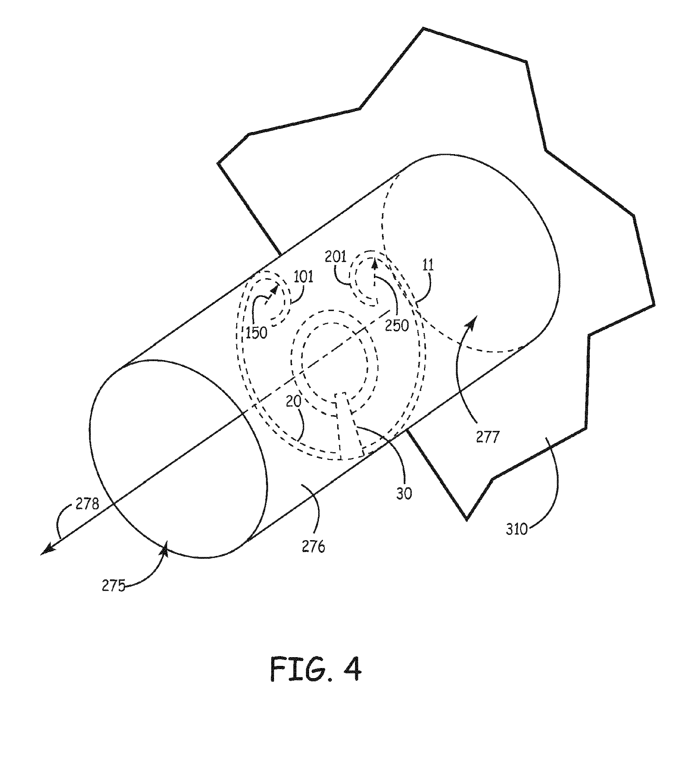

Figure 4 shows an oblique view of one embodiment of the retaining clip 11 of Figures 3A-3C in an exemplary cavity 275 in accordance with the present invention. As shown in Figure 4, the curved structure 20 is configured to be operably retained in a getter cavity 275 with a getter 300 attached to a distal end 35 of the tab 30. In Figure 4, a portion of the side wall 276 of the cavity 275 is removed to provide of view of the retaining clip 11 and getter 300. The cavity 275 is also referred to herein as "getter cavity 275". As shown in Figure 4, the major axis 27 of the major curve 125 (Figure 3A) is approximately parallel to an axis 278 of the getter cavity 275 when the retaining clip 11 is operably positioned in the getter cavity 275.

In one implementation of this embodiment, the retaining clip 11 is a ring-laser-gyroscope getter-retaining ring 11 and the cavity 275 is a getter cavity 275 that opens at an end 277 to the ring laser gyroscope represented generally at 310. In this manner, the ring-laser-gyroscope getter-retaining ring 11 is operably positioned in the getter cavity 275 so the getter 300 is in communication with the ring laser gyroscope 310 via the end 277 that opens to the ring laser gyroscope 310. In one implementation of this embodiment, first-loop feature 101 and second-loop feature 201 are formed on the first end portion 100 and the second end portion 200, respectively, to facilitate compression for stable maintenance of the ring-laser-gyroscope getter-retaining ring 11 in getter cavity 275. The retaining clip 11 with attached getter 300 is positioned as part of a ring laser gyroscope 310. The getter 300 is comprised of a material that absorbs gasses in the cavity 275 that would extinguish the lasing action of the ring laser gyroscope 310.

In another implementation of this embodiment, the retaining clip 11 is configured to stably position a getter in a getter cavity that is connected with or inside of another type of system. In such an embodiment, the getter absorbs gasses in the system so that the system operates as required.

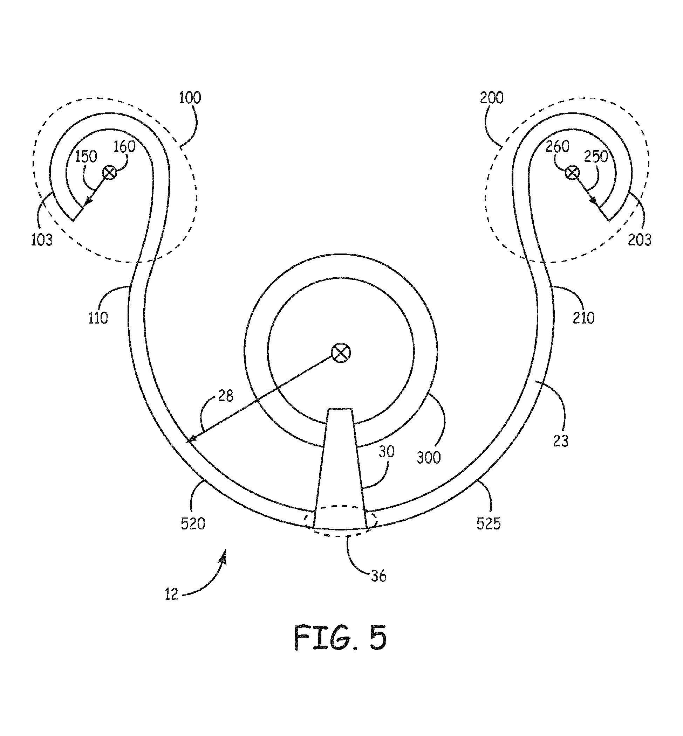

Figure 5 shows a front view of one embodiment of a retaining clip 12 for a getter 300. The retaining clip 12 includes one tab 30 that seamlessly extends from a first-extension region 36 of the first-edge surface 23 while the first-end portion 100 of the curved structure 520 is curved into a first-minor curve 103 and the second-end portion 200 of the curved structure 520 is curved into a second-minor curve 203. As shown in Figure 5, the first-minor curve 103 begins to curve in a direction opposite that in which a first-interfacing curve region 110 (between the major curve 525 and the first-minor curve 103) is curving and the second-minor curve 203 begins to curve in a direction opposite that in which a second-interfacing curve region 210 (between the major curve 525 and the second-minor curve 203) is curving. Thus, the first-minor curve 103 shown in Figure 5 curves in the opposite from the first-minor curve 101 shown in Figure 3A. Likewise, the second-minor curve 203 shown in Figure 5 curves in the opposite from the second-minor curve 201 shown in Figure 3A.

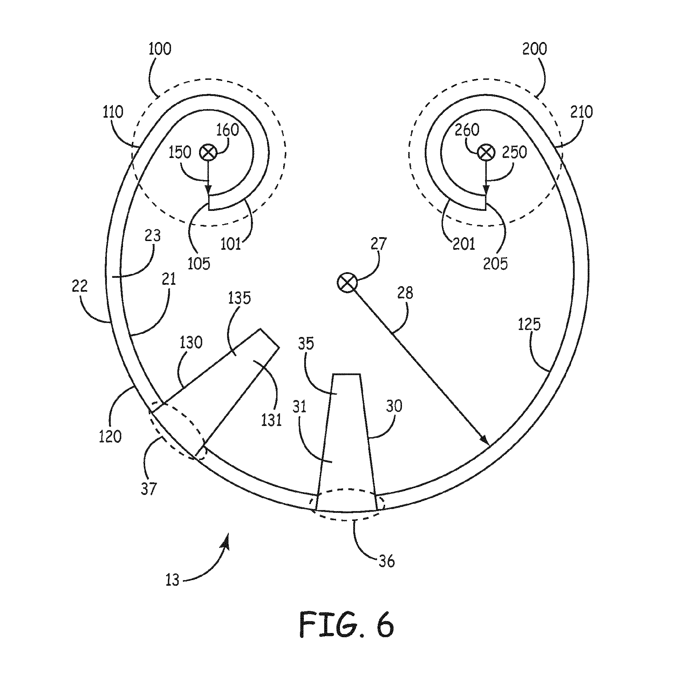

Figure 6 shows a front view of one embodiment of a retaining clip 13 for a getter 300. The retaining clip 13 includes a first tab 30 that seamlessly extends from a first-extension region 36 of the first-edge surface 23 and a second tab 130 that seamlessly extends from a second-extension region 37 of the first-edge surface 23. In one implementation of this embodiment, the second tab 130 seamlessly extends from a second-extension region 37 of the second-edge surface 24 (Figure 2A). The first-minor curve 101 and the second-minor curve 201 shown in Figure 6 are similar to the first-minor curve 101 1 and the second-minor curve 201 shown in Figure 3A.

In one implementation of this embodiment, the retaining clip 12 of Figure 5 is modified to include two tabs 30 and 31 that seamlessly extend from the first-edge surface 23. In another implementation of this embodiment, the retaining clip 12 of Figure 5 is modified to include a first tab 30 that seamlessly extends from the first-edge surface 23 and a second tab 31 that seamlessly extends from the second-edge surface 24 (Figure 2A).

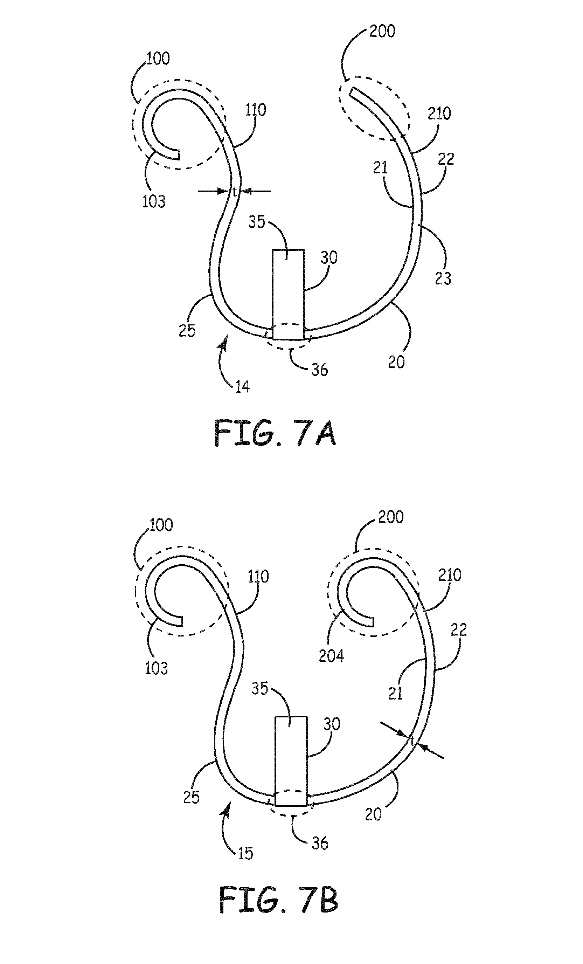

Figure 7A shows a front view of one embodiment of a retaining clip 14 for a getter 300. The retaining clip 14 includes a tab 30 that seamlessly extends from a first-extension region 36 of the first-edge surface 23. In one implementation of this embodiment, a second tab seamlessly extends from a second-extension region 37 (Figure 6) of either the first-edge surface (Figure 2A) or the second-edge surface 24 (Figure 2A) of the curved structure 20 of retaining clip 14. The first-minor curve 103 shown in Figure 7A is similar to the first-minor curve 103 shown in Figure 3A. As shown in Figure 7A, there is no second-minor curve and the second-end portion 200 is not bent from the second-interfacing curve region 210.

Figure 7B shows a front view of one embodiment of a retaining clip 15 for a getter 300. The retaining clip 15 includes a tab 30 that seamlessly extends from a first-extension region 36 of the first-edge surface 23. In one implementation of this embodiment, a second tab seamlessly extends from a second-extension region 37 (Figure 6) of either the first-edge surface (Figure 2A) or the second-edge surface 24 (Figure 2A) of the curved structure 20 of retaining clip 14.

The first-minor curve 103 shown in Figure 7B is similar to the first-minor curve 103 shown in Figure 7A. As shown in Figure 7B, a second-minor curve 204 continues to curve in the same direction in which the second-interfacing curve region 210 (between the major curve 25 and the second-minor curve 204) is curving.

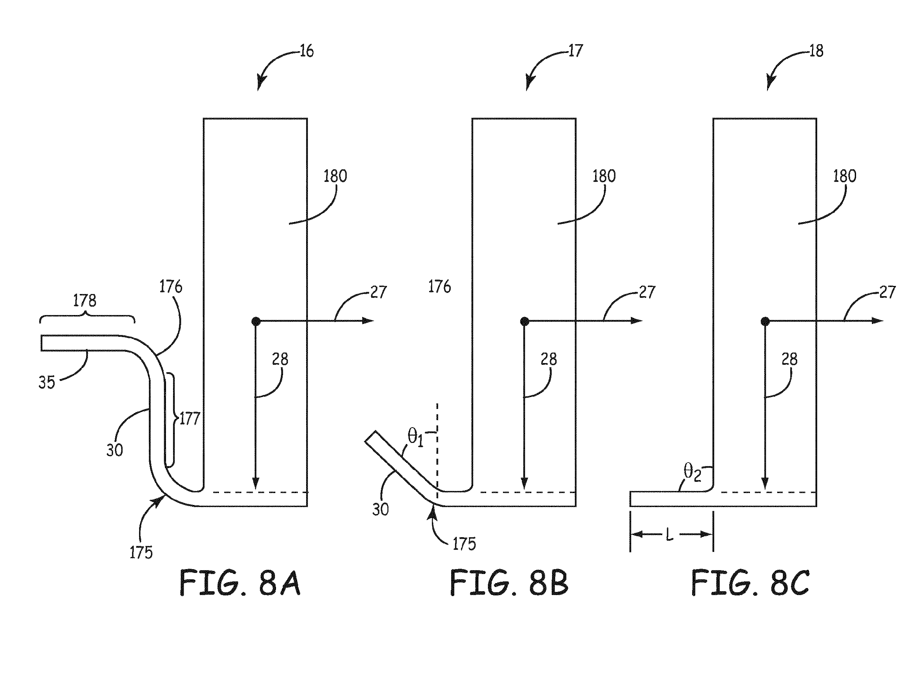

In all the embodiments of retaining clips 10-15 shown in Figures 1-7B, the tabs 30 and/or 31 are bent so that the greater part of the length L of the tabs 30 and/or 31 are approximately parallel to the radius-of-curvature 27 of the major curve 25. Figures 8A-8C, 9, and 10A-10F show views of embodiments of retaining clips 16-18 and 601-606 for a getter in which the tabs 30 and/or 31 are not bent, are bent two or more times, or are bent one time so that the greater part of the length L of the tabs 30 and/or 31 are non-parallel to the radius-of-curvature 27 of the major curve 25. The loop features of the embodiments of the retaining clips 16, 17, 18, 601, 602, 603, 603, 604, and 605 shown in respective Figures 8A-8C, 9, and 10A-10D are not shown, but can include any of the various types of loop features shown and described herein.

Figure 8A shows a side view of the retaining clip 16 in which a single tab 30 is bent twice. Tab 30 is bent at first bend-region represented generally at 175 and at a second bend-region represented generally at 176. The first bend at first bend-region 175 positions section 177 of the tab 30 to be approximately parallel to the major radius-of-curvature 28 and approximately perpendicular to the major axis 27. The second bend at second bend-region 176 positions section 178 of the tab 30 to be approximately parallel to the major axis 27 and to be approximately perpendicular to the major radius-of-curvature 28.

Figure 8B shows a side view of the retaining clip 17 in which a single tab 30 is bent once to be non-parallel to the radius-of-curvature 27. Tab 30 is bent at a bend-region represented generally at 175. The bend at bend-region 175 positions most of the length of the tab 30 to be at an angle θ₁ with respect to the major radius-of-curvature 28.

Figure 8C shows a side view of the retaining clip 18 in which a single tab 30 is not bent. The length L of tab 30 is perpendicular to the major radius-of-curvature 28 and parallel to the major axis 27. Thus, as shown in Figure 8C, the length L of the tab 30 is at an angle θ₂ = 90 degrees with respect to the major radius-of-curvature 28.

The curved structure 180 shown in Figures 8A-8C can be shaped in accordance with any one of the various embodiments shown in Figures 1-7B. Specifically, the loop features of the curved structure 180 of the retaining clips 16, 17, and 18 shown in respective Figures 8A-8C can include any of the various types of loop features shown and described herein.

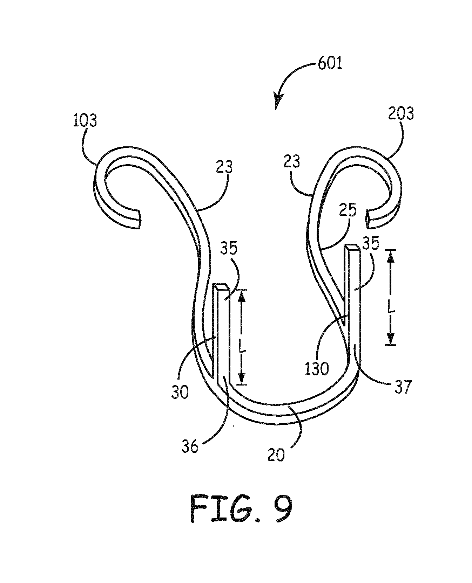

Figure 9 shows an oblique view of one embodiment of a retaining clip 601 for a getter 300. The retaining clip 601 includes a first tab 30 that seamlessly extends from a first-extension region 36 of the first-edge surface 23 and a second tab 130 that seamlessly extends from a second-extension region 37 of the first-edge surface of the curved structure 20 of retaining clip 16. The first tab 30 is not bent and the second tab 130 is not bent as described above with reference to Figure 8C. The length L of the first tab 30 and the length L of the second tab 130 are perpendicular to the major radius-of-curvature 28 and parallel to the major axis 27 of the major curve 25 of retaining clip 601. A getter can be positioned between the distal ends 35 of the first tab 30 and the second tab 130.

The retaining clip 601 includes a first-minor curve 103 similar to the first-minor curve 103 shown in Figure 5 and a second-minor curve 203 similar to the second-minor curve 203 shown in Figure 5.

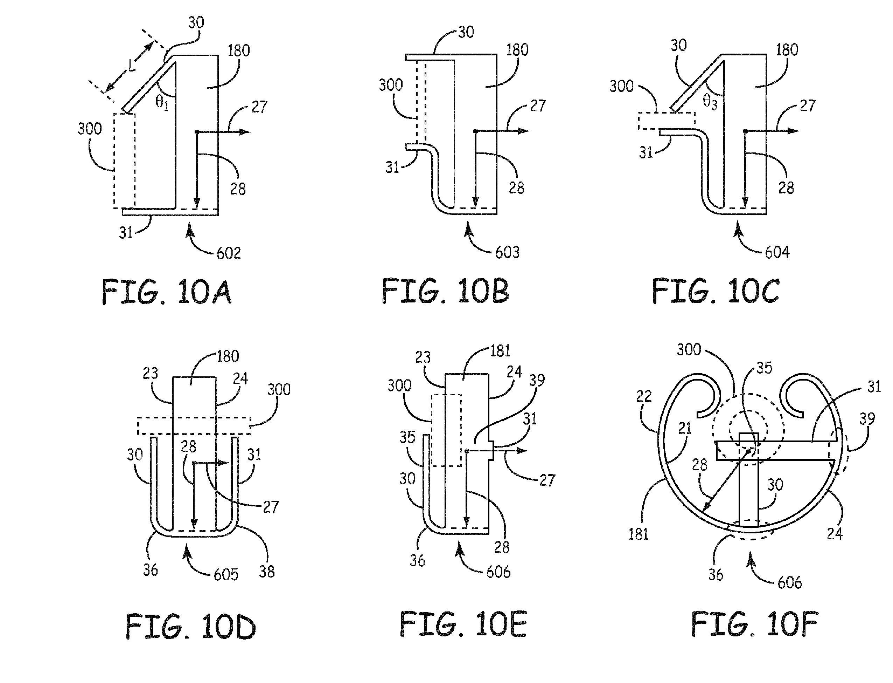

Figures 10A, 10B, 10C, 10D, and 10E show side views of retaining clips 602, 603, 604, 605, and 606, respectively. Figure 10F shows a front view of the retaining clip 606 of Figure 10E. These exemplary embodiments of the retaining clips 602, 603, 604, 605, and 606 illustrate the variety of possible configurations of retaining clips that are possible and are not meant to limit the embodiments of retaining clips. The curved structure 180 shown in Figures 10A-10D can be shaped in accordance with any one of the various embodiments shown in Figures 1-7B. Specifically, the loop features of the curved structure 180 of the retaining clips 602, 603, 604, and 605 shown in respective Figures 10A-10D can include any of the various types of loop features shown and described herein. The curved structure 181 shown in Figures 10E-10F are shaped in accordance with the embodiment curved structure 120 shown in Figures 3A-3B.

As shown in Figure 10A, the first tab 30 is bent once so that most of length L of the tab 30 is at an angle θ₁ with respect to the major radius-of-curvature 28. The second tab 31 in Figure 10A is not bent so the length L of tab 31 is perpendicular to the major radius-of-curvature 28 and parallel to the major axis 27. An exemplary getter 300 is shown as a dashed rectangle being held parallel to the major radius-of-curvature 28.

As shown in Figure 10B, the first tab 30 not bent so the length L of first tab 30 is perpendicular to the major radius-of-curvature 28 and parallel to the major axis 27. The second tab 31 in Figure 10B is bent twice in a manner similar to the two bends in tab 31 shown in Figure 8A. An exemplary getter 300 is shown as a dashed rectangle being held parallel to the major radius-of-curvature 28.

As shown in Figure 10C, the first tab 30 is bent once so that most of length L of the first tab 30 is at an angle θ₃ with respect to the major radius-of-curvature 28. The second tab 31 in Figure 10C is bent twice in a manner similar to the two bends in the bend-regions 175 and 176 in tab 30 shown in Figure 8A. An exemplary getter 300 is shown as a dashed rectangle being held perpendicular to the major radius-of-curvature 28.

As shown in Figure 10D, the first tab 30 and second tab 31 are each bent once so that most of length of the first tab 30 and most of length of the second tab 31 are approximately parallel to the major radius-of-curvature 28 of the curved structure 180 as shown in Figure 2A. The first tab 30 seamlessly extends from a first-extension region 36 of the first-edge surface 23. The second tab 31 seamlessly extends from a second-extension region 38 of the second-edge surface 24. The first-extension region 36 of the first-edge surface 23 opposes the second-extension region 38 of the second-edge surface 24. An exemplary getter 300 is shown as a dashed rectangle being held perpendicular to the major radius-of-curvature 28 on the tips of the first tab 30 and the second tab 31.

Figure 10E shows a side view of the retaining clip 606 having a curved structure 181. Figure 10F shows a front view of the retaining clip 606 of Figure 10E. As shown in Figures 10E and 10F, the first tab 30 is bent once so that most of length of the first tab 30 is approximately parallel to the major radius-of-curvature 28 of the curved structure 181. The first tab 30 seamlessly extends from a first-extension region 36 of the first-edge surface 23. As shown in Figures 10E and 10F, the second tab 31 seamlessly extends from a second-extension region 39 of the second-edge surface 24. The first-extension region 36 of the first-edge surface 23 has an offset angle θ_{offset} of approximately 90 degrees from the opposing the second-extension region 39 of the second-edge surface 24. An exemplary getter 300 is shown as a dashed rectangle being held parallel to the major radius-of-curvature 28 between the distal ends 35 of the first tab 30 and second tab 31.

Other embodiments of retaining clips configured with the curved structure and the at least one tab that seamlessly extends from at least one of the first-edge surface and the second-edge surface are possible. In one implementation of this embodiment, there are three or more tabs the seamlessly extend from at least one of the first-edge surface and the second-edge surface of the curved structure. The embodiments of retaining clips described herein are operable to hold a getter that is attached to at least one distal end of the respective at least one tab and to stably hold the retaining clip in a getter cavity with the attached getter. In one implementation of this embodiment, the getter is welded to a distal end (ends) of the tab (tabs). In another implementation of this embodiment, the getter is spot welded to a distal end (ends) of the tab (tabs). In yet another implementation of this embodiment, embodiments of the retaining clips described herein are ring-laser-gyroscope getter-retaining rings that are operable to hold a getter that is attached to at least one distal end of the respective at least one tab and to stably hold the ring-laser-gyroscope getter-retaining ring in a getter cavity 275 so an attached getter is in communication with a ring laser gyroscope 310 (Figure 4).

In the embodiments of the retaining clips shown in Figures 1-10F, the curved structure and the at least one tab are formed from a single sheet of metal. The metal is one of: aluminum, silver, nickel, titanium, brass, copper, steel, tin, gold, platinum, alloys thereof, or other metals.

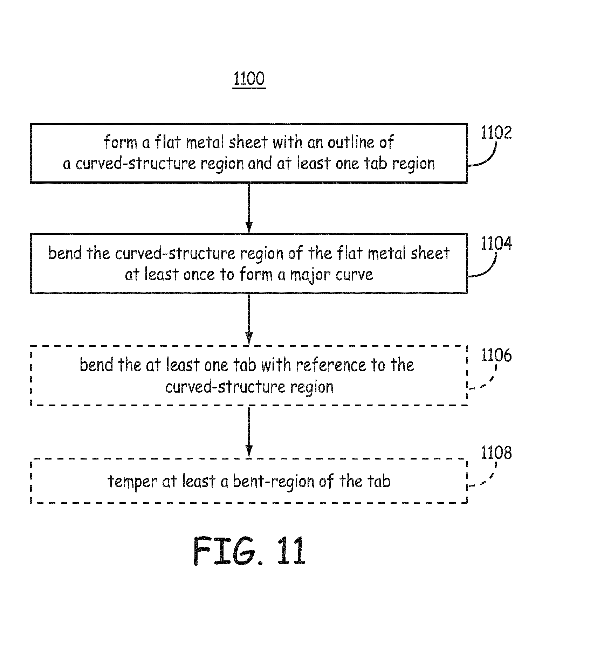

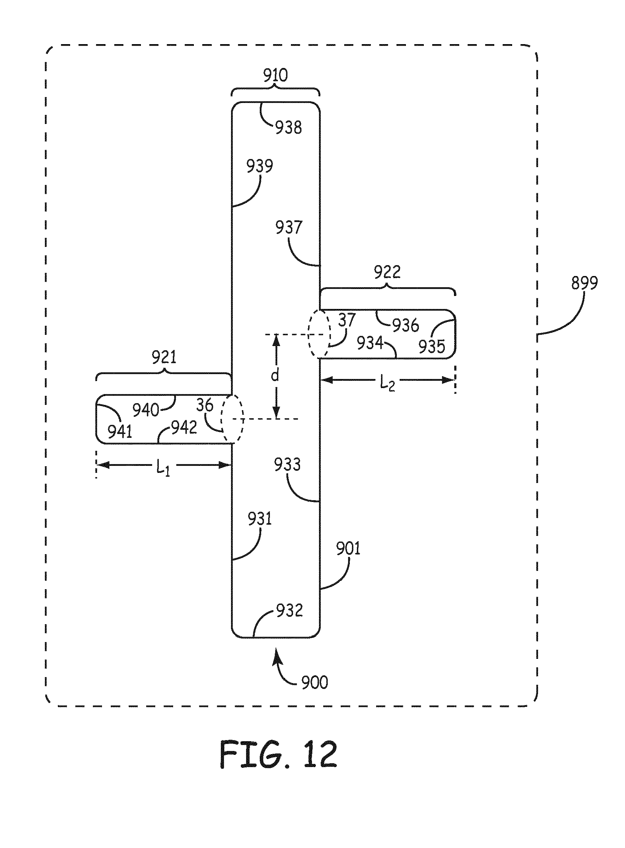

Figure 11 is a flow diagram of one embodiment of a method 1100 of forming a retaining clip for a getter in accordance with the present invention. The method 1100 is applicable to forming embodiments of retaining clips 10, 11, 12, 13, 14, 15, 16, 17, 18, 601, 602, 603, 603, 604, 605, and 606 shown in respective Figures 1, 3A, 5, 6, 7A, 7B, 8A-8C, 9, and 10A-10E. Method 1100 is described with reference to Figure 12. Figure 12 is a front view of a flat metal sheet 899 with an outline 901 of a curved-structure region 910 and two tab regions 921 and 922 in accordance with the present invention.

At block 1102, a flat metal sheet represented generally at 900 is formed with an outline 901 of a curved-structure region 910 and at least one tab region 921 and 922. The outline 901 includes a first-edge 939 and a second-edge 937 opposing the first-edge 939. As defined herein, forming a flat metal sheet 900 with an outline 901 is removing or extracting a portion of a larger flat metal sheet represented generally as dashed box 899 so that the extracted portion 900 is continuous (un-segmented) and two opposing main surfaces of the extracted portion have edges 931-942, which continuously connect to each other as shown in Figure 12, in the shape of the outline 901. As shown in Figure 12, the edges 934 and 936 have a length L₂ and the edges 940 and 942 have a length L₁. In one implementation of this embodiment, the length L₁ equals the length L₂.

The portion 900 extracted from the larger flat metal sheet 899 that has the shape of the outline 901 is also referred to herein as "extracted flat metal sheet 900" and "flat metal sheet 900". The metal sheet is formed from a metal, such as, aluminum, silver, nickel, titanium, brass, copper, steel, tin, gold, platinum, alloys thereof, or other metals. In one implementation of this embodiment, the thickness of the metal sheet 900 is about 10 mils. In another implementation of this embodiment, the thickness of the metal sheet 900 is between 5 mils and 15 mils. Other thicknesses are possible.

The flat metal sheet 900 is extracted from the larger flat metal sheet 899 by one of several ways known in the art. For example, forming the flat metal sheet 900 includes stamping, die cutting, etching, or punching the flat metal sheet 900 in a shape of the outline 901 of the curved-structure region 910 and the at least one tab region 921. In one implementation of this embodiment, the flat metal sheet 900 is extracted from the larger flat metal sheet 899 by punching the larger flat metal sheet 899 with a punch having the shape of the outline 901. In another implementation of this embodiment, the flat metal sheet 900 is cut from the larger flat metal sheet 899 by a metal cutter. In yet another implementation of this embodiment, the flat metal sheet 900 is extracted from the larger flat metal sheet 899 by an etching process in which the material in the larger flat metal sheet 899 that is outside of the shape of the outline 901 is chemically dissolved.

At block 1104, the curved-structure region 910 of the extracted flat metal sheet 900 is bent at least once to form a major curve 25 having a major radius-of-curvature 28 and a major axis 27 perpendicular to the major radius-of-curvature 28 (Figure 1). Specifically, the edge 932 of the flat metal sheet 900 is bent toward the edge 938 of the flat metal sheet 900.

In one implementation of this embodiment, the curved-structure region 910 of the flat metal sheet 900 is bent at least twice to form the major curve and to form at least one minor curve with a respective at least one minor radius-of-curvature. In this embodiment, the at least one minor radius-of-curvature is less than the major radius-of-curvature. In another implementation of this embodiment, the major curve 25 has a radius-of-curvature that varies. For example, the major curve 25 can form a spiral. In yet another implementation of this embodiment, minor radius-of-curvature is varies.

As shown in Figure 12, the tab region 921 is offset from the tab region 922 by a distance "d". When the curved-structure region 910 is bent at least once to form a major curve 25 with the major radius-of-curvature 28 (i.e., RCₘₐⱼₒᵣ), an offset angle θ_{offset}= d/ RCₘₐⱼₒᵣ is between the bend-regions 36 and 37. The bend-region 36 is also referred to herein as "first-extension region 36" of the first-edge surface and the bend-region 37 is also referred to herein as "second-extension region 37" of the second-edge surface.

Block 1106 is optional. At block 1106, the at least one tab region 921 is bent with reference to the curved-structure region 910 so that least a portion of the at least one tab region 921 is non-parallel to the major axis. In one implementation of this embodiment, first tab region 921 is bent with reference to the curved-structure region 910 so that least a portion of the at least one tab region 921 is non-parallel to the major axis 27 and the second tab region 922 is bent with reference to the curved-structure region 910 so that least a portion of the at least one tab region 921 is non-parallel to the major axis 27. In another implementation of this embodiment, the second tab region 922 is bent with reference to the curved-structure region 910 so that least a portion of the at least one tab region 921 is non-parallel to the major axis 27 and the first tab region 921 is not bent. In yet another implementation of this embodiment, first tab region 921 is bent with reference to the curved-structure region 910 so that least a portion of the at least one tab region 921 is non-parallel to the major axis 27 and the second tab region 922 is not bent with reference to the curved-structure region 910.

In one implementation of this embodiment, only one tab region extends from the curved-structure region 910. In another implementation of this embodiment, three or more tab regions extend from the curved-structure region 910.

Block 1108 is optional. At block 1108, at least a bend-region 36 of the tab region 921 is tempered after the at least one tab region 921 is bent with reference to the curved-structure region 910. As defined herein, the bend-region is the region of the tab region 921 that is bent. Either one of both of the first tab region 921 and the second tab region 922 include one or more bend regions. The tempering of the bend-region 36 of the tab region 921 stiffens or hardens the bend-region 36 of the tab region 921. In one implementation of this embodiment, the curved-structure region 910 and the tab region 921 are tempered after block 1104 is completed. In another implementation of this embodiment, the curved-structure region 910 and the tab region 921 are tempered after blocks 1104 and 1106 are completed. Tempering is known in the art and requires heating and cooling metal material. Other techniques to harden the bend-region 36 and/or bend-region 37 are possible.

### Example Embodiments

Example 1 includes a retaining clip for a getter comprising a curved structure including a first surface, a second surface opposing the first surface, a first-edge surface, and a second-edge surface opposing the first-edge surface, the curved structure curved in a major curve having a major radius-of-curvature and a major axis perpendicular to the major radius-of-curvature; and at least one tab seamlessly extending from at least one of the first-edge surface and the second-edge surface, wherein the curved structure is configured to be operably retained in a getter cavity with the getter that is attached to the at least one tab.

Example 2 includes the retaining clip of Example 1, wherein at least one of the at least one tab is bent at least once.

Example 3 includes the retaining clip of any of Examples 1-2, wherein the at least one tab includes a first tab seamlessly extending from a first-extension region of the first-edge surface and a second tab seamlessly extending from a second-extension region the second-edge surface.

Example 4 includes the retaining clip of any of Examples 1-3, wherein the at least one tab includes a first tab seamlessly extending from a first-extension region of the first-edge surface and a second tab seamlessly extending from a second-extension region of the first-edge surface.

Example 5 includes the retaining clip of any of Examples 1-4, wherein the major curve of the curved structure includes a first end portion and a second end portion, wherein at least one of the first and second end portions is curved to have at least one minor radius-of-curvature, wherein the at least one minor radius-of-curvature is less than the major radius-of-curvature.

Example 6 includes the retaining clip of Example 5, wherein the first end portion is curved to form a first-minor curve that begins to curve in direction opposite that in which a first-interfacing curve region, between the major curve and the first-minor curve, is curving, the first-minor curve having a first-minor radius-of-curvature, wherein the second end portion is curved to form a second-minor curve that begins to curve in direction opposite that in which a second-interfacing curve region, between the major curve and the second-minor curve, is curving, the second-minor curve having a second-minor radius-of-curvature.

Example 7 includes the retaining clip of any of Example 5, wherein the first end portion is curved to form a first-minor curve that begins to curve in direction opposite that in which a first-interfacing curve region, between the major curve and the first-minor curve, is curving, the first-minor curve having a first-minor radius-of-curvature, and wherein the second end portion is curved to form a second-minor curve that continues to curve in a same direction in which a second-interfacing curve region, between the major curve and the second-minor curve, is curving, the second-minor curve having a second-minor radius-of-curvature.

Example 8 includes the retaining clip of Example 5, wherein the first end portion is curved to form a first-minor curve that continues to curve in a same direction in which a first-interfacing curve region, between the major curve and the first-minor curve, is curving, the first-minor curve having a first-minor radius-of-curvature, and wherein the second end portion is curved to form a second-minor curve that continues to curve in a same direction in which a second-interfacing curve region, between the major curve and the second-minor curve, is curving, the second-minor curve having a second-minor radius-of-curvature.

Example 9 includes the retaining clip of any of Examples 1-8, wherein the major axis of the major curve is approximately parallel to an axis of the getter cavity when the retaining clip is operably positioned in the getter cavity.

Example 10 includes the retaining clip of any of Examples 1-9, wherein the at least one tab includes a respective at least one distal end to which the getter is welded.

Example 11 includes the retaining clip of any of Examples 1-10, wherein the curved structure and the at least one tab are formed from a sheet of metal.

Example 12 includes the retaining clip of Example 11, wherein the metal is one of: aluminum, silver, nickel, titanium, brass, copper, steel, tin, gold, platinum, and alloys thereof.

Example 13 includes a method of forming a retaining clip for a getter, the method comprising forming a flat metal sheet with an outline of a curved-structure region and at least one tab region, the outline including a first-edge and a second-edge opposing the first-edge; and bending the curved-structure region of the flat metal sheet at least once to form a major curve having a major radius-of-curvature and a major axis perpendicular to the major radius-of-curvature.

Example 14 includes a method of forming a retaining clip for a getter, including any of the retaining clips of Examples 1-11, the method comprising forming a flat metal sheet with an outline of a curved-structure region and at least one tab region, the outline including a first-edge and a second-edge opposing the first-edge; and bending the curved-structure region of the flat metal sheet at least once to form a major curve having a major radius-of-curvature and a major axis perpendicular to the major radius-of-curvature.

Example 15 includes the method of Example 13, further comprising bending at least one of the at least one tab region with reference to the curved-structure region, wherein at least a portion of the at least one of the at least one tab region is non-parallel to the major axis.

Example 16 includes the method of any of Examples 13 and 15, further comprising tempering at least one bend-region of the at least one tab region.

Example 17 includes the method of any of Examples 13-16, wherein forming the flat metal sheet comprises one of stamping, die cutting, etching, and punching the flat metal sheet in a shape of the outline of the curved-structure region and the at least one tab.

Example 18 includes the method of any of Examples 13-17, wherein bending the curved-structure region of the flat metal sheet at least once comprises bending the curved-structure region of the flat metal sheet at least twice to form the major curve and to form at least one minor curve with a respective at least one minor radius-of-curvature, wherein the at least one minor radius-of-curvature is less than the major radius-of-curvature.

Example 19 includes a ring-laser-gyroscope getter-retaining ring, comprising a curved structure including a first surface, a second surface opposing the first surface, a first-edge surface, and a second-edge surface opposing the first-edge surface, the curved structure curved in a major curve having a major radius-of-curvature and a major axis perpendicular to the major radius-of-curvature; and at least one tab seamlessly extending from at least one of the first-edge surface and the second-edge surface, wherein when a getter is attached to the at least one tab, and when the ring-laser-gyroscope getter-retaining ring is operably positioned in a getter cavity of a ring laser gyroscope, the getter is in communication with the ring laser gyroscope.

Example 20 includes the ring-laser-gyroscope getter-retaining ring of Example 19, wherein the major curve of the curved structure includes two end portions curved into at least one loop-feature having at least one respective minor radius-of-curvature, wherein the at least one minor radius-of-curvature is less than the major radius-of-curvature.

Example 21 includes the ring-laser-gyroscope getter-retaining ring of Examples 19-20, wherein at least one of the at least one tab is bent at least once.

Example 22 includes a method of forming a retaining clip for a getter, including any of the ring-laser-gyroscope getter-retaining ring of Examples 19-21, the method comprising forming a flat metal sheet with an outline of a curved-structure region and at least one tab region, the outline including a first-edge and a second-edge opposing the first-edge; and bending the curved-structure region of the flat metal sheet at least once to form a major curve having a major radius-of-curvature and a major axis perpendicular to the major radius-of-curvature.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A retaining clip (11) for a getter (300) comprising:
a curved structure (120) including a first surface (21), a second surface (22) opposing the first surface, a first-edge surface (23), and a second-edge surface (24) opposing the first-edge surface, the curved structure curved in a major curve (25) having a major radius-of-curvature (28) and a major axis (27) perpendicular to the major radius-of-curvature; and
at least one tab (30) seamlessly extending from at least one of the first-edge surface and the second-edge surface, wherein the curved structure is configured to be operably retained in a getter cavity (275) with the getter that is attached to the at least one tab.

2. The retaining clip (11) of claim 1, wherein at least one of the at least one tab (30) is bent at least once.

3. The retaining clip (605) of claim 1, wherein the at least one tab (30) includes a first tab (30) seamlessly extending from a first-extension region (36) of the first-edge surface (23) and a second tab (31) seamlessly extending from a second-extension region (38) the second-edge surface (24).

4. The retaining clip (13) of claim 1, wherein the at least one tab (30) includes a first tab (30) seamlessly extending from a first-extension region (36) of the first-edge surface (23) and a second tab (130) seamlessly extending from a second-extension region (37) of the first-edge surface.

5. The retaining clip (14) of claim 1, wherein the major curve (25) of the curved structure (20) includes a first end portion (110) and a second end portion (210), wherein at least one of the first and second end portions (100, 200) is curved to have at least one minor radius-of-curvature (150), wherein the at least one minor radius-of-curvature is less than the major radius-of-curvature (28).

6. The retaining clip (12) of claim 5, wherein the first end portion (100) is curved to form a first-minor curve (103) that begins to curve in direction opposite that in which a first-interfacing curve region (110), between the major curve (525) and the first-minor curve, is curving, the first-minor curve having a first-minor radius-of-curvature (150),
wherein the second end portion (200) is curved to form a second-minor curve (201) that begins to curve in direction opposite that in which a second-interfacing curve region (210), between the major curve and the second-minor curve, is curving, the second-minor curve having a second-minor radius-of-curvature (250).

7. The retaining clip (15) of claim 5, wherein the first end portion (100) is curved to form a first-minor curve (103) that begins to curve in direction opposite that in which a first-interfacing curve region (110), between the major curve (20) and the first-minor curve, is curving, the first-minor curve having a first-minor radius-of-curvature, and
wherein the second end portion (200) is curved to form a second-minor curve (204) that continues to curve in a same direction in which a second-interfacing curve region (210), between the major curve (25) and the second-minor curve, is curving, the second-minor curve having a second-minor radius-of-curvature (250).

8. The retaining clip (11) of claim 5, wherein the first end portion (100) is curved to form a first-minor curve (101) that continues to curve in a same direction in which a first-interfacing curve region (110), between the major curve (120) and the first-minor curve, is curving, the first-minor curve having a first-minor radius-of-curvature, and
wherein the second end portion (200) is curved to form a second-minor curve (201) that continues to curve in a same direction in which a second-interfacing curve region (210), between the major curve (120) and the second-minor curve, is curving, the second-minor curve having a second-minor radius-of-curvature (250).

9. The retaining clip (11) of claim 1, wherein the major axis (27) of the major curve (125) is approximately parallel to an axis (278) of the getter cavity (275) when the retaining clip is operably positioned in the getter cavity.

10. The retaining clip (11) of claim 1, wherein the curved structure (20) and the at least one tab (30) are formed from a sheet of metal (900).
